**Europäisches Patentamt**

**European Patent Office**

**Office européen des brevets**

(11) Veröffentlichungsnummer: **0 177 968**
**B1**

(12) # EUROPÄISCHE PATENTSCHRIFT

(45) Veröffentlichungstag der Patentschrift:
**16.08.89**

(51) Int. Cl.⁴: **H 04 N 7/173**

(21) Anmeldenummer: **85112925.4**

(22) Anmeldetag: **11.10.85**

(54) Anordnung zur Gebührenverwaltung von Kommunikationseinrichtungen in Krankenhäuser, Hotels oder dergleichen.

(30) Priorität: **11.10.84 DE 3437363**

(43) Veröffentlichungstag der Anmeldung:
**16.04.86 Patentblatt 86/16**

(45) Bekanntmachung des Hinweises auf die Patenterteilung:
**16.08.89 Patentblatt 89/33**

(84) Benannte Vertragsstaaten:
**AT BE CH DE FR GB IT LI LU NL SE**

(56) Entgegenhaltungen:
**EP-A- 0 052 822**
**DE-A- 2 747 432**

(73) Patentinhaber: **Alois Zettler, Elektrotechnische Fabrik GmbH, Holzstrasse 28-30, D-8000 München 5 (DE)**

(72) Erfinder: **Lenz, Karl, Karwinskistrasse 22, D-8000 München 60 (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

ACTORUM AG

## Beschreibung

Die Erfindung betrifft eine Anordnung zur Gebührenverwaltung von Kommunikationseinrichtungen in Krankenhäusern, Hotels oder dergleichen, mit einer zentralen, einen Speicher mit den Kommunikationseinrichtungen jeweils gesondert zugeordneten Speicherplätzen umfassenden Datenverarbeitungsanlage, an die die Kommunikationseinrichtungen über die Inbetriebnahme der Kommunikationseinrichtungen erfassende Terminals angeschlossen sind.

Eine Anordnung dieser Art ist aus der DE-A 2 747 432 bekannt. Bei dieser Anordnung werden in eine Kabelfernsehanlage zusätzliche Programme eingespeist, deren Inanspruchnahme kostenpflichtig ist. Den eingespeisten Signalen werden Steuersignale überlagert, die in einem Terminal des Fernsehgeräts erfasst und bei Benutzung der kostenpflichtigen Programme als Gebührensteuersignale zu einer zentralen Datenverarbeitungsanlage zurückgesendet werden. Die Datenverarbeitungsanlage erlaubt die zentrale Erfassung und Inrechnungstellung der Gebühren. Bei der bekannten Anordnung ist jedoch lediglich eine nachträgliche Bezahlung der in Anspruch genommenen Dienstleistung möglich.

Aus der DE-C 3 043 839 bzw. der EP-A 052 822 ist es bekannt, Gebühren für Mietfernsehgeräte in Krankenhäusern dadurch im voraus zu kassieren, dass der Betrieb des Fernsehgeräts durch einen in Zeiteinheiten aufladbaren, von dem Fernsehgerät abnehmbaren Speichermodul gesteuert wird. Der Speichermodul kann gegen Entrichtung der Mietgebühr mit einer wählbaren Anzahl von Zeiteinheiten geladen werden und erlaubt nachfolgend den Betrieb des Fernsehgeräts zu einem vom Patienten bestimmbaren Zeitpunkt. Die bekannte Anordnung ist jedoch vergleichsweise umständlich in der Handhabung, insbesondere bei Verwendung in Krankenhäusern ist der Sterilisierungsaufwand nicht vernachlässigbar.

Es ist Aufgabe der Erfindung, eine Anordnung zur Gebührenverwaltung von Kommunikationseinrichtungen in Krankenhäusern, Hotels oder dergleichen anzugeben, die eine auf einfache Weise überwachbare Vorauszahlung von Nutzungsgebühren für die Kommunikationseinrichtungen erlaubt. Die Anordnung soll für die Gebührenerfassung von Mietfernsehgeräten und Telefoneinrichtungen gleichermassen geeignet sein, wobei der Verwaltungsaufwand sowohl beim Inkasso der Gebühren als auch bei eventuellen Rückerstattungen vergleichsweise gering sein soll.

Ausgehend von der eingangs erläuterten Anordnung wird diese Aufgabe erfindungsgemäss dadurch gelöst, dass an die Datenverarbeitungsanlage wenigstens eine Dateneingabeeinrichtung angeschlossen ist, über die die Speicherplätze der Kommunikationseinrichtungen selektiv adressierbar sind und über die Daten für eine wählbare Anzahl von Nutzungseinheiten der Kommunikationseinrichtungen vor Inbetriebnahme der Kommunikationseinrichtungen in die adressierten Speicherplätze einschreibbar sind, dass die Terminals von der Datenverarbeitungsanlage steuerbare Sperrschaltungen zum Blockieren der jeweils zugeordneten Kommunikationseinrichtungen aufweisen, dass die Datenverarbeitungsanlage die in den Speicherplätzen gespeicherten Daten auf Überschreiten der gewählten Anzahl von Nutzungseinheiten überwacht und bei Überschreiten der gewählten Anzahl die Kommunikationseinrichtungen, deren gewählte Anzahl von Nutzungseinheiten überschritten ist, für die weitere Inbetriebnahme blockiert, und dass mit der Datenverarbeitungsanlage eine Datenausgabeeinrichtung verbunden ist, die die Ausgabe der in den Speicherplätzen gespeicherten Daten erlaubt.

Bei dieser Anordnung werden die Gebühren für eine vorbestimmte Anzahl Nutzungseinheiten, zum Beispiel Fernsehtage oder Telefongebühreneinheiten, im Voraus entrichtet. Die Gebühren werden unter Bezugnahme auf die dem Bett des Patienten oder dem Gästezimmer des Hotels zugeordneten Kommunikationseinrichtungen, wie zum Beispiel einem Fernsehgerät oder Telefon, entrichtet und in dem Speicher der Datenverarbeitungsanlage gespeichert. Es hat sich herausgestellt, dass zusätzliche Kennungsträger, wie zum Beispiel Magnetkarten oder dergleichen, für die Inanspruchnahme der Dienstleistungen von Kommunikationseinrichtungen nicht erforderlich sind, insbesondere dann nicht, wenn die den Kommunikationseinrichtungen zugeordneten Terminals Displays umfassen, an denen der Patient bzw. der Gast des Hotels von seinem Terminal aus sein Gebührenguthaben in dem Speicher der Datenverarbeitungsanlage kontrollieren kann. Durch Verzicht auf Kennungsträger können die ansonsten zusätzlich erforderlichen Lesegeräte an den Terminals entfallen, was den konstruktiven Aufwand der Anlage erheblich verringert. Nicht verbrauchte Gebühren können nachträglich abgerechnet und zurückerstattet werden, da die Datenausgabeeinrichtung jederzeit eine Kontrolle der momentan gespeicherten Daten erlaubt.

Bei der Dateneingabeeinrichtung kann es sich um ein von einem Kassierer zu bedienendes Dateneingabegerät handeln. In einer bevorzugten Ausführungsform ist das Dateneingabegerät jedoch als Kassenautomat ausgebildet, welcher eine Tastatur zur Eingabe der die Kommunikationseinrichtung spezifisch kennzeichnenden Daten, ein Display zur Anzeige der eingegebenen Daten und einen Quittungsdrucker zur Ausgabe von Quittungsabschnitten zumindest über an dem Kassenautomat eingezahlte Geldbeträge und eingegebene Daten aufweist. Auf diese Weise erübrigt sich zusätzliches Personal zum Inkasso der Mietgebühren. Durch die Ausgabe von Quittungsbelegen, die beispielsweise die Bett- und/oder Zimmernummer, den eingezahlten Betrag, das Datum und die Uhrzeit sowie gegebenenfalls bei einer Trennung von Telefongebühren und Fernsehgebühren den Verwendungszweck ausweisen, lassen sich Einzahlungen auch nachträglich beweisen, was die Überprüfung von Reklamationen und die Rückerstattung nicht verbrauchter Gebühren erleichtert.

Für die Abrechnung von Telefongebühren kann jedem Telefonapparat eine eigene Nebenstellenleitung zugeordnet sein, die von dem Terminal des Telefonapparats abhängig von der Gebührenvorauszahlung blockiert werden kann. Insbesondere für Krankenhäuser mit Mehrbettzimmern geeignet ist eine Ausführungsform, bei welcher mehrere Telefonapparate, vorzugsweise sämtliche Telefonapparate eines Zimmers, über eine Umschalteinrichtung an eine gemeinsame, nunmehr dem Zimmer zugeordnete Nebenstellenleitung angeschlossen sind. Die Umschalteinrichtung sorgt dafür, dass lediglich einer der Telefonapparate mit der Nebenstellenleitung verbunden ist, während die Verbindung zu den übrigen Telefonapparaten der Gruppe blockiert ist. Über die Umschalteinrichtung werden auch die Terminals der Telefone gesteuert, so dass der Gebührenimpuls der mit der Umschalteinrichtung verbundenen Nebenstellenleitung selektiv das Gebührenkonto des mit der Amtsleitung verbundenen Telefonapparats der Gruppe belastet.

Wiederum für die Anwendung in Mehrbettzimmern von Krankenhäusern geeignet ist eine Ausführungsform, bei der eine Gruppe von Terminals ein gemeinsames Fernsehgerät, insbesondere hinsichtlich der Programmauswahl und der Inbetriebnahme steuert. Jedes der Terminals steuert jedoch für sich einen Tonkanal, an den ein dem Bett des Patienten zugeordneter Kopfhörer angeschlossen ist.

Die Datenverarbeitungsanlage kann so programmiert sein, dass sie die Kommunikationseinrichtung bei aufgebrauchtem Gebührenguthaben augenblicklich blockiert. Da dies insbesondere beim Telefonieren unerwünscht ist, ist zweckmässigerweise vorgesehen, dass die Datenverarbeitungsanlage eine Überschreitung der vorausbezahlten Nutzungseinheiten um eine vorbestimmte Anzahl vor Blockierung des weiteren Betriebs zulässt und/oder die Kommunikationseinrichtung erst auf eine vom Benutzer der Kommunikationseinrichtung veranlasste Unterbrechung der Benutzung hin blockiert. Insbesondere die letztgenannte Variante erlaubt es, ein Telefongespräch zu Ende zu führen oder eine bereits begonnene Fernsehsendung zu Ende zu sehen. Der eingeräumte Kreditbetrag kann limitiert sein. Eine weitere Benutzung ist jedoch in jedem Fall nur dann möglich, wenn vor einer erneuten Benutzungsaufnahme das Gebührenkonto im Speicher der Datenverarbeitungsanlage aufgefüllt worden ist. Um den Benutzer der Kommunikationseinrichtung an die Überschreitung zu erinnern, kann an dem Display des Terminals eine optische Anzeige des überschrittenen Betrags vorgesehen sein. Die Kommunikationseinrichtungen und Terminals sind üblicherweise an örtlich festgelegten Stellen des Krankenhauses bzw. des Hotels aufgestellt. Diese räumliche Zuordnung lässt sich auf einfache Weise zu einem Personenkennungssystem ergänzen, bei welchem an einer Anzeigeeinrichtung, beispielsweise in Form eines den Standort der Terminals kennzeichnenden Anzeigefeld, der Aufenthalt von mit Kennungssendern versehenen Personen angezeigt werden kann. Die Kennungssender senden selektive Kennungssignale, die in einem örtlich begrenzten Bereich, insbesondere in einem auf das Zimmer begrenzten Bereich, von Kennungsempfängern empfangen werden, die die Kennungssignale über die Terminals und die Datenverarbeitungsanlage an die Anzeigeeinrichtung weiterleiten. In einem Krankenhaus kann auf diese Weise zum Beispiel der momentane Standort der mit den Kennungssendern ausgerüsteten Ärzte und Schwestern ermittelt werden. Die Kennungssender können optische oder akustische Kennungssignale abgeben, insbesondere Infrarot- oder Ultraschallsignale, die mit einer dem Kennungssender und damit der zu identifizierenden Person zugeordneten Kennungsinformation moduliert sind. Hierbei genügt es, wenn lediglich eines der Terminals oder gegebenenfalls ein mit dem Terminal verbundenes Gerät, beispielsweise das Fernsehgerät mit dem Empfänger ausgerüstet ist, um den Aufenthalt der zu identifizierenden Person in dem Zimmer zu lokalisieren.

Im folgenden soll ein Ausführungsbeispiel der Erfindung anhand einer Zeichnung näher erläutert werden.

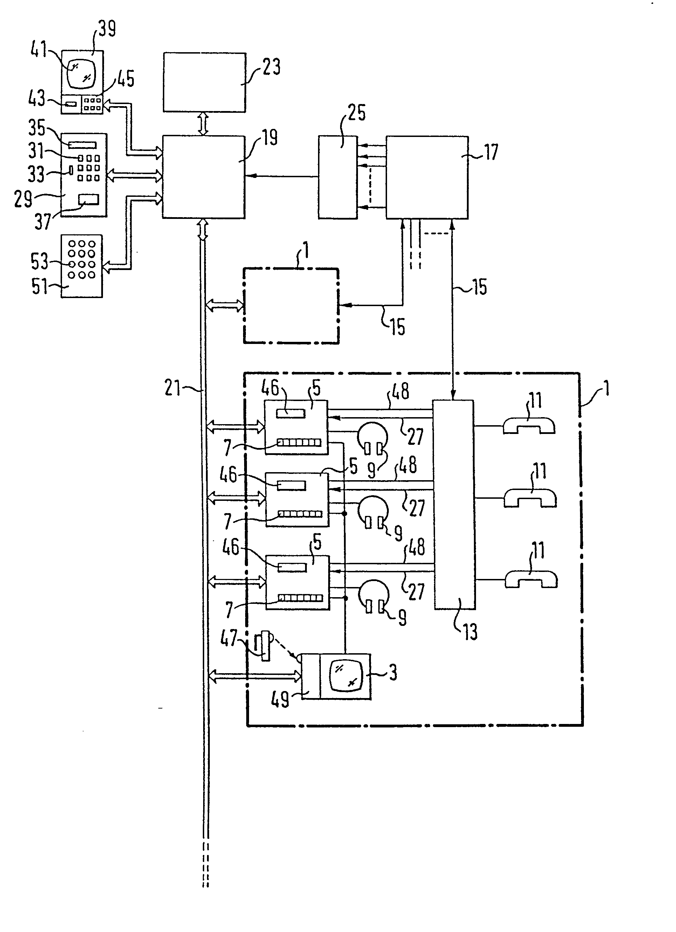

Die Zeichnung zeigt ein schematisches Blockschaltbild einer Anordnung zur Verwaltung von Fernseh- und Telefongebühren in einem Krankenhaus.

In durch strichpunktierte Linien 1 angedeuteten Mehrbettzimmern des Krankenhauses sind Fernsehgeräte 3 aufgestellt, die über den Betten zugeordnete Terminals 5 bedient werden. An einer Tastatur 7 jedes Terminals 5 kann das den Terminals eines Zimmers gemeinsame Fernsehgerät 3 ein- und ausgeschaltet werden, und es kann das gewünschte Programm eingestellt werden. Der Fernsehton wird über einen an das Terminal 5 angeschlossenen Kopfhörer 9 empfangen. Jedem Bett ist ferner ein Telefonapparat 11 zugeordnet. Die Telefonapparate 11 des Zimmers 1 sind über eine Umschalteinrichtung 13 an eine gemeinsame, dem Zimmer 1 zugeordnete Nebenstellenleitung 15 einer Nebenstellen-Telefonzentrale 17 des Krankenhauses angeschlossen. Die Umschalteinrichtung 13 sorgt dafür, das lediglich einer der Telefonapparate 11 mit der Nebenstellenleitung 15 verbunden werden kann. Beim Abheben des Hörers eines der Telefonapparate 11 werden die übrigen Telefonapparate des Zimmers blockiert.

Die Gebühren für die Benutzung des Fernsehgeräts 3 und des Telefons 11 werden mittels einer zentralen Datenverarbeitungsanlage 19 erfasst, die über eine Ringleitung bzw. einen Datenbus 21 an jedes der Terminals 5 angeschlossen ist. Die Datenverarbeitungsanlage 19 umfasst einen Speicher 23 mit Speicherplätzen für jedes der Terminals 5. In den Speicherplätzen kann ein Gebührenguthaben für die Benutzung des Fernsehgeräts 3 und des Telefons 11 gespeichert werden. Für die Speicherung von Gebührenguthaben von Fernsehen und Telefon sind gesonderte Speicherplätze vorgesehen. Bei Benutzung des Fernsehgeräts oder des Telefons werden von dem Gebührenguthaben vorbestimmte Gebühreneinheiten abgebucht. Die Terminals 5 sind so ausgebildet, dass sie auf die Benutzung des Fernsehers 3 und des Telefons 11 ansprechen und dementsprechend über die Datenverarbeitungsanlage 19 den zugeordneten Speicherplatz in dem Datenspeicher 23 adressieren.

Bei der Benutzung des Fernsehgeräts wird beispielsweise pro Tag beim erstmaligen Einschalten des Fernsehgeräts eine vorbestimmte Gebühreneinheit von dem gespeicherten Gebührendarlehen abgebucht.

Für die den einzelnen Telefonapparaten 11 zugeordnete Gebührenerfassung ist die Telefonzentrale 17 über ein Gebührenimpuls-Koppelfeld 25 mit der Datenverarbeitungsanlage 19 verbunden. Das Koppelfeld 25 erfasst Gebührenimpulse bei Amtsgesprächen, die von einem beliebigen der drei über die Umschalteinrichtung 13 an die Nebenstellenleitung 15 angeschlossenen Telefonapparate 11 geführt werden. Von welchem der drei Telefonapparate 11 aus telefoniert wird, wird von demjenigen Terminal 5 erfasst, welches dem mit der Amtsleitung verbundenen Telefonapparat 11 zugeordnet ist. Die Terminals 5 sind hierzu über Steuerleitungen 27 mit der Umschalteinrichtung 13 verbunden und adressieren dementsprechend den diesem Apparat zugeordneten Telefongebühren-Speicherplatz. Die Datenverarbeitungsanlage 19 bucht aus diesem Speicherplatz entsprechend den über das Koppelfeld 25 zugeführten Gebühreninformationen, zum Beispiel Gebührenimpulsen ab. Durch diese Massnahme können die Telefongebühren trotz mehrfacher Ausnutzung der Nebenstellenleitung 15 selektiv den einzelnen Telefonapparaten 11 zugeordnet werden. Die Zahl der mit der Umschalteinrichtung 13 verbundenen Telefonapparate kann auch grösser oder kleiner als drei sein.

Das Gebührenguthaben der einzelnen Speicherplätze wird durch Vorauszahlung an wenigstens einem mit der Datenverarbeitungsanlage 19 verbundenen Kassenautomaten 29 entrichtet. Der Kassenautomat verfügt über eine Tastatur 31, über die der Speicherplatz des gewünschten Terminals 5 durch Eintippen der Zimmernummer und Bettnummer adressiert werden kann. Durch nachfolgendes Eintippen des gewünschten Gebührenguthabens und Einwerfen des Geldbetrags in einen Geldschlitz 33 wird das Gebührenguthaben in den Speicherplatz geladen. An einem Display 35 können die eingegebenen Daten vor Übernahme in die Datenverarbeitungsanlage geprüft und gegebenenfalls korrigiert werden. Ein Quittungsdrucker 37 liefert nach Übernahme des Gebührenguthabens in den Speicher einen Quittungsbeleg, aus welchem das Datum, gegebenenfalls die Uhrzeit sowie der entrichtete Betrag und dessen Verwendungszweck zu entnehmen ist. Der Quittungsbeleg erleichtert die Überprüfung eventueller Reklamationen und die Rückerstattung nicht verbrauchter Beträge.

Während die Kassenautomaten 29 den Patienten zugänglich sind, ist ein Dateneingabegerät 39 dem Personal vorbehalten. Das Dateneingabegerät 39 kann über einen Monitor 41, einen Quittungsdrucker 43 und ebenfalls über eine Tastatur 45 verfügen. Das Dateneingabegerät 39 kann bei Verwendung von Kassenautomaten 29 entfallen und umgekehrt. Die Terminals 5 haben Displays 46, an denen der momentane Kontostand jederzeit kontrolliert werden kann.

Die Terminals 5 enthalten jeweils eine Sperreinrichtung, die die gebührenpflichtige Inbetriebnahme des Telefonapparats 11 oder des Fernsehgeräts 3 blockiert, wenn der Kontostand des Speicherplatzes kein Gebührenguthaben beim Einschalten des Fernsehapparats 3 oder bei der Amtsbelegung durch den Telefonapparat aufweist. Für die Blockierung der Telefonapparate 11 sind die Terminals über Steuerleitungen 48 an die Umschalteinrichtung 13 angeschlossen. Wird das Gebührenguthaben während des Betriebs des Fernsehgeräts 3 aufgebraucht oder während des Telefongesprächs, so kann vorgesehen sein, dass das Terminal 5 den Betrieb augenblicklich unterbricht. Da dies vom Standpunkt des Benutzers aus gesehen unerwünscht ist, ist vorgesehen, dass in den Speicherplätzen auch Gebührenschulden speicherbar sind, die während einer laufenden, nicht unterbrochenen Benutzung anfallen. Die Datenverarbeitungsanlage 19 blockiert über die Terminals 5 in diesem Fall die Benutzung erst nach einer vom Benutzer hervorgerufenen Unterbrechung, beispielsweise durch Abschalten des Fernsehgeräts 3 oder durch Auflegen des Hörers des Telefonapparats 11. Eine erneute Benutzungsaufnahme ist erst nach Begleichen der Gebührenschuld und Einzahlen eines Gebührenguthabens möglich.

Durch die Terminals 5 und der daran angeschlossenen Geräte ist eine räumliche Zuordnung der über den Datenbus 21 zur Datenverarbeitungsanlage 19 hin übertragenen Signale zu den einzelnen Zimmern 1 möglich. Dies wird zur Standortlokalisierung des Krankenhauspersonals ausgenutzt, welches mit tragbaren Infrarotsendern 47 ausgerüstet ist. Die Infrarotsender 47 senden spezifische, dem jeweiligen Träger, beispielsweise einem Arzt oder einer Schwester, zugeordnete Kennungssignale, die von einem in dem Zimmer aufgestellten Infrarotempfänger 49 empfangen und über eines der Terminals 5 oder ein gesondertes Terminal und den Datenbus 21 zur Datenverarbeitungsanlage 19 hin übertragen werden. An die Datenverarbeitungsanlage 19 ist ein Anzeigenfeld 51 angeschlossen, welches für jedes der zu überwachenden Zimmer ein Display 53 aufweist. Über das dem Zimmer zugeordnete Display 53 kann die Kennung des Infrarotsenders 47 oder eine seinem Träger zugeordnete Kennung, beispielsweise dessen Name, angezeigt werden. Vorteil dieser Art der Standortermittlung ist, dass bei Betreten des Zimmers keine Meldetasten oder dergleichen betätigt werden müssen. Der Infrarotempfänger 49 kann an einer beliebigen Stelle des Zimmers montiert sein und ist vorzugsweise in die Steuereinheit des Fernsehempfängers 3 integriert. Anstelle einer Infrarot-Übertragung können auch andere drahtlose Übertragungsarten mit auf ein Zimmer begrenzter Reichweite benutzt werden, beispielsweise Ultraschallübertragungen.

## Patentansprüche

1. Anordnung zur Gebührenverwaltung von Kommunikationseinrichtungen in Krankenhäusern, Hotels oder dergleichen, mit einer zentralen, einen Speicher (23) mit den Kommunikationseinrichtungen (3, 9, 11) jeweils gesondert zugeordneten Speicherplätzen umfassenden Datenverarbeitungsanlage (19), an die die Kommunikationseinrichtungen (3, 9, 11) über die Inbetriebnahme der Kommunikationseinrichtungen (3, 9, 11) erfassende Terminals (5) angeschlossen sind, dadurch gekennzeichnet, dass an die Datenverarbeitungsanlage (19) wenigstens eine Dateneingabeeinrichtung (29, 39) angeschlossen ist, über die die Speicherplätze selektiv adressierbar sind und über die Daten für eine wählbare Anzahl von Nutzungseinheiten der Kommunikationseinrichtungen (3, 9, 11) vor Inbetriebnahme der Kommunikationseinrichtung in die adressierten Speicherplätze einschreibbar sind, dass die Terminals (5) von der Datenverarbeitungsanlage (19) steuerbare Sperrschaltungen zum Blockieren der jeweils zugeordneten Kommunikationseinrichtungen (3, 9, 11) aufweisen, dass die Datenverarbeitungsanlage (19) die in den Speicherplätzen gespeicherten Daten auf Überschreiten der gewählten Anzahl von Nutzungseinheiten überwacht und bei Überschreiten der gewählten Anzahl die Kommunikationseinrichtungen (3, 9, 11) für die weitere Inbetriebnahme blockiert, und dass mit der Datenverarbeitungsanlage (19) eine Datenausgabeeinrichtung (35, 37) verbunden ist, die die Ausgabe der in den Speicherplätzen gespeicherten Daten ermöglicht.

2. Anordnung nach Anspruch 1, dadurch gekennzeichnet, dass die Dateneingabeeinrichtung als Kassenautomat (29) ausgebildet ist, welcher eine Tastatur (31) zur Eingabe von die Kommunikationseinrichtungen (3, 9, 11) spezifisch kennzeichnenden Daten ein Display (35) zur Anzeige der eingegebenen Daten und einen Quittungsdrucker (37) zur Ausgabe von Quittungsabschnitten zumindest über an den Kassenautomat (29) eingezahlte Geldbeträge und eingegebene Daten aufweist.

3. Anordnung nach Anspruch 1 oder 2, dadurch gekennzeichnet, dass es sich bei den Kommunikationseinrichtungen (3, 9, 11) um an eine Nebenstellen-Telefonzentrale (17) angeschlossene, über jeweils zugeordnete Terminals (5) blokkierbare Telefonapparate (11) handelt, dass die Telefonapparate (11) gruppenweise an Umschalteinrichtungen (13) angeschlossen sind, von denen jede für sich an eine Nebenstellenleitung (15) der Telefonzentrale (17) angeschlossen ist und die jeweils einen der Telefonapparate (11) der Gruppe mit der Nebenstellenleitung (15) verbindet und die übrigen Telefonapparate (11) der Gruppe gegen Benutzung blockiert, dass die Telefonzentrale (17) über ein Gebührenimpuls-Koppelfeld (25) mit der Datenverarbeitungsanlage (19) verbunden ist und dass die Datenverarbeitungsanlage (19) die Daten in den den einzelnen Telefonapparaten (11) zugeordneten Speicherplätzen abhängig von Gebühreninformationen, die der Nebenstellenleitung (15) der Gruppe zugeordnet sind, überwacht, wobei der überwachte Speicherplatz durch das die Inbetriebnahme des Telefonapparats (11) erfassende Terminal (5) adressiert ist.

4. Anordnung nach einem der Ansprüche 1 bis 3, dadurch gekennzeichnet, dass es sich bei den Kommunikationseinrichtungen um jeweils von einer Gruppe von Terminals (5) steuerbare Fernsehgeräte (3) handelt und dass jedes Terminal (5) einen Tonkanal mit einem dem Terminal zugeordneten Kopfhörer (9) steuert.

5. Anordnung nach einem der vorhergehenden Ansprüche, dadurch gekennzeichnet, dass die Datenverarbeitungsanlage (19) so programmiert ist, dass sie eine Überschreitung der gewählten Anzahl von Nutzungseinheiten um eine vorbestimmte Anzahl vor Blockierung des weiteren Betriebs zulässt und/oder die Kommunikationseinrichtungen (3, 9, 11) erst auf eine vom Benutzer der Kommunikationseinrichtung (3, 9, 11) veranlasste Unterbrechung der Benutzung hin blockiert.

6. Anordnung nach einem der vorhergehenden Ansprüche, dadurch gekennzeichnet, dass die Terminals (5) Displays zur Anzeige des momentanen Inhalts des dem Terminal zugeordneten Speicherplatzes aufweisen.

7. Anordnung nach Anspruch 6, dadurch gekennzeichnet, dass das Display des Terminals (5) eine Überschreitung der an der Dateneingabeeinrichtung (19) gewählten Anzahl von Nutzungseinheiten optisch anzeigt.

8. Anordnung nach einem der vorhergehenden Ansprüche, dadurch gekennzeichnet, dass zumindest eines der Terminals (5) in einem Zimmer oder die mit dem Terminal (5) verbundene Kommunikationseinrichtung (3) einen Empfänger (49) zum Empfang optischer oder akustischer selektiver Kennungssignale und insbesondere infraroter Kennungssignale oder Ultraschall-Kennungssignale aufweist, dass zur Personenidentifizierung tragbare Sender (47) für die Kennungssignale vorgesehen sind, dass das Terminal (5) die Kennungssignale zur Datenverarbeitungsanlage (19) überträgt und dass an die Datenverarbeitungsanlage (19) eine Anzeigeeinrichtung (51) angeschlossen ist, die für die mit Empfängern (49) ausgerüstete Zimmer die den Aufenthalt einer mit dem Sender (47) ausgerüsteten Person durch Anzeige der Kennung des Senders (47) und/oder eine der Kennung zugeordnete Information anzeigt.

## Claims

1. An arrangement for administering the charges of communications devices in hospitals, hotels or the like, with a central data processing unit (19) which comprises a memory (23) with memory locations allocated separately to the respective communications devices (3, 9 11) and to which the communications devices (3, 9, 11) are connected via terminals (5) which detect the startup of the communications devices (3, 9, 11), characterised in that, to the data processing unit (19), there is connected at least one data input device (25, 39) by means of which the memory locations can be addressed selectively and by means of which data for a selectable number of service units of the communications devices (3, 9, 11) can be input into the addressed memory locations before startup of the communications device, in that the terminals (5) have lockout circuits which can be controlled by the data processing unit (19) for blocking the respectively allocated communications devices (3, 9, 11), in that the data processing unit (19) monitors whether the data stored in the memory locations exceeds the selected number of service units and, if the selected number is exceeded, blocks the communications devices (3, 9, 11) for further startup and in that a data output device (35, 37), which allows the output of the data stored in the memory locations, is connected to the data processing unit (19).

2. An arrangement according to Claim 1, characterised in that the data input device is constructed as an automatic cash register (29) which comprises a keyboard (31) for inputting data which specifically identify the communications devices (3, 9, 11), a display (35) for displaying the input data and a receipt printer (37) for outputting receipt segments at least concerning amounts of money paid at the automatic cash register (29) and data input.

3. An arrangement according to Claim 1 or 2, characterised in that the communications devices (3, 9, 11) are telephone apparatuses (11) which are connected to a private extension telephone exchange (17) which can be blocked via respectively allocated terminals (5), in that the telephone apparatuses (11) are connected in groups to changeover devices (13), each of which is connected as such to a private extension line (15) of the telephone exchange (17) and connects one of the respective telephone apparatuses (11) in the group to the private extension line (15) and blocks the other telephone apparatuses (11) in the group from use, in that the telephone exchange (17) is connected via a charge pulse coupling field (25) to the data processing unit (19) and in that the data processing unit (19) monitors the data in the memory locations allocated to the individual telephone apparatuses (11), depending on charge information allocated to the private extension line (15) of the group, the monitored memory location being addressed by the terminal (5) which detects the startup of the telephone apparatus (11).

4. An arrangement according to one of Claims 1 to 3, characterised in that the communications devices are television apparatuses (3) which can be controlled respectively by a group of terminals (5) and that each terminal (5) controls a sound channel with headphones (9) allocated to the terminal.

5. An arrangement according to one of the preceding claims, characterised in that the data processing unit (19) is programmed such that it allows the selected number of service units to be exceeded by a predetermined number before blocking further operation and/or blocks the communications devices (3, 9, 11) only when use is interrupted by the user of the communications device (3, 9, 11).

6. An arrangement according to one of the preceding claims, characterised in that the terminals (5) have displays for displaying the instantaneous content of the memory location allocated to the terminal.

7. An arrangement according to Claim 6, characterised in that the display of the terminal (5) displays optically an exceeding of the number of service units selected at the data input device (19).

8. An arrangement according to one of the preceding claims, characterised in that at least one of the terminals (5) in a room or the communications device (3) connected to the terminal (5) comprises a receiver (49) for receiving optical or acoustic selective identification signals and, in particular, infrared identification signals or ultrasonic identification signals, in that transmitters (47) which are carried for personal identification are provided for the identification signals, in that the terminal (5) transmits the identification signals to the data processing unit (19) and in that a display device (51) is connected to the data processing unit (19), which display device (51) displays the stay of a person equipped with the transmitter (47) in the case of rooms equipped with receivers (49) by displaying the identification of the transmitter (47) and/or information allocated to identification.

## Revendications

1. Agencement pour la gestion de la taxation des installations de communication dans des hôpitaux, hôtels ou analogues, avec un ordinateur (19) central, qui comprend une mémoire (23) avec des emplacements de mémoire respectivement et séparément affectés aux installations de communication (3, 9, 11), et auquel les installations de communication (3, 9, 11) sont reliées par l'intermédiaire de terminaux (5) détectant la mise en service des installations de communication (3, 9, 11), caractérisé en ce qu'au moins un poste d'entrée de données (29, 39) est relié à l'ordinateur (19), poste par l'intermédiaire duquel il est possible d'adresser sélectivement les emplacements de mémoire, et par l'intermédiaire duquel les

données pour un nombre sélectionnable d'unités d'utilisation des dispositifs de communication (3, 9, 11) peuvent, avant la mise en service du dispositif de communication, être enregistrées dans les emplacements de mémoire adressés, en ce que les terminaux (5) présentent des circuits de verrouillage qui peuvent être commandés par l'ordinateur (19) afin de verrouiller les dispositifs de communication (3, 9, 11) respectivement associés, en ce que l'ordinateur (19) surveille les données mémorisées dans les emplacements de mémoire en vue du dépassement du nombre sélectionné d'unités d'utilisation et, en cas de dépassement du nombre sélectionné, verrouille les dispositifs de communication (3, 9, 11) afin d'empêcher la poursuite de leur mise en service, et en ce qu'un poste de sortie de données (35, 37), qui permet d'éditer les données mémorisées dans les emplacements de mémoire, est relié à l'ordinateur (19).

2. Agencement selon la revendication 1, caractérisé en ce que le poste d'entrée de données est réalisé sous la forme d'une caisse automatique (29) qui présente un clavier (31) pour introduire des données caractérisant spéficiquement les dispositifs de communication (3, 9, 11), un dispositif d'affichage (35) pour afficher les données introduites, et une imprimante de reçus (37) pour éditer des reçus au moins en ce qui concerne l'argent versé à la caisse automatique (29) et les données introduites.

3. Agencement selon la revendication 1 ou 2, caractérisé en ce que les dispositifs de communication (3, 9, 11) sont des appareils téléphoniques (11) verrouillables par l'intermédiaire de terminaux (5) qui leur sont respectivement associés, et reliés à un central téléphonique privé (17), en ce que les appareils téléphoniques (11) sont raccordés par groupes à des dispositifs de commutation (13), chaque dispositif de commutation (13) étant individuellement raccordé à une ligne respective (15) du central téléphonique privé (17), et chaque dispositif (13) reliant à chaque fois un des appareils téléphoniques (11) du groupe à la ligne (15) et verrouillant les autres appareils téléphoniques (11) du groupe pour empêcher leur utilisation, en ce que le central téléphonique (17) est relié à l'ordinateur (19) par l'intermédiaire d'un champ coupleur d'impulsions de taxation (25), et en ce que l'ordinateur (19) surveille les données dans les emplacements de mémoire affectés aux différents appareils téléphoniques (11) indépendamment des informations de taxation qui sont affectées à la ligne (15) du groupe, l'emplacement de mémoire surveillé étant adressé par le terminal (5) détectant la mise en service de l'appareil téléphonique (11).

4. Agencement selon l'une des revendications 1 à 3, caractérisé en ce que les dispositifs de communication sont des téléviseurs (3) qui peuvent être respectivement commandés par un groupe de terminaux (5), et en ce que chaque terminal (5) commande un canal audio avec un casque d'écoute (9) associé au terminal.

5. Agencement selon l'une des revendications précédentes, caractérisé en ce que l'ordinateur (19) est programmé de telle sorte qu'il autorise un dépassement du nombre sélectionné d'unités d'utilisation d'un nombre prédéterminé de ces unités avant de verrouiller la poursuite du fonctionnement, et/ou qu'il ne verrouille les dispositifs de communication (3, 9, 11) qu'à la suite d'une interruption de l'utilisation provoquée par l'utilisateur du dispositif de communication (3, 9, 11).

6. Agencement selon l'une des revendications précédentes, caractérisé en ce que les terminaux (5) présentent des dispositifs d'affichage pour afficher le contenu momentané de l'emplacement de mémoire associé au terminal.

7. Agencement selon la revendication 6, caractérisé en ce que le dispositif d'affichage du terminal (5) affiche optiquement le dépassement du nombre d'unités d'utilisation sélectionné au poste d'entrée de données (29).

8. Agencement selon l'une des revendications précédentes, caractérisé en ce qu'au moins un des terminaux (5), dans une chambre, ou le dispositif de communication (3) relié au terminal (5), présente un récepteur (49) pour recevoir des signaux d'identification sélectifs optiques ou acoustiques, et notamment des signaux d'identification infrarouges ou des signaux d'identification ultrasonores, en ce qu'il est prévu, en vue de l'identification des personnes, des émetteurs portables (47) pour les signaux d'identification, en ce que le terminal (5) transmet les signaux d'identification à l'ordinateur (19), et en ce qu'un dispositif indicateur (51) est raccordé à l'ordinateur (19), dispositif qui, pour la chambre équipée de récepteurs (49), indique le séjour d'une personne équipée de l'émetteur (47) en indiquant l'identification de l'émetteur (47) et/ou une information associée à l'identification.